# EUROPÄISCHE PATENTSCHRIFT

(11) **EP 1 746 327 B1**
(45) Veröffentlichungstag und Bekanntmachung des Hinweises auf die Patenterteilung: **02.11.2011**
(21) Anmeldenummer: 06011789.2
(22) Anmeldetag: 08.06.2006
(51) Int. Cl.: F16L 33/06

(54) **Schelle mit einem Anbauelement**
Clamp with an accessory element
Collier de serrage avec un accessoire

(30) Priorität: 22.07.2005 DE 202005011542 U
(43) Veröffentlichungstag der Anmeldung: 24.01.2007
(73) Patentinhaber: NORMA Germany GmbH, 63477 Maintal (DE)
(72) Erfinder: Lange, Frank, 63654 Büdingen/Eckartshausen (DE); Henrich, Detlef, 63694 Limeshain (DE); Krauss, Mathias, 61130 Nidderau (DE)
(74) Vertreter: Knoblauch, Andreas

(56) Entgegenhaltungen:
- WO-A-96/34223
- DE-A1- 10 324 236

## Beschreibung

Die Erfindung betrifft eine Schelle mit einem Schellenband und einem Anbauelement, das mit dem Schellenband verbunden ist.

Eine derartige Schelle ist aus DE 103 24 236 A1 bekannt. Das Anbauelement dient als Haltevorrichtung für ein Schlauchende. Das Anbauelement ist auf der Außenseite des Schellenbandes angeordnet. Ein Nietstift ist als Verbindungselement zwischen dem Schellenband und dem Anbauteil vorgesehen. Dieser Nietstift geht auch durch das Ende eines Schlauchs, auf dem die Schlauchschelle angeordnet ist. Die Verbindung zwischen dem Schellenband und dem Anbauteil kann auch auf andere Weise erfolgen, beispielsweise durch Verkleben, Verschweißen, Verlöten oder Verschrauben.

WO 96/34223 A1 zeigt eine Schlauchschelle mit einem geringförmig gebogenen Schellenband, das sich an seinen beiden Enden überlappt. Im Überlappungsbereich ist ein Schraubengehäuse angeordnet, in dem eine Schraube drehbar gelagert ist, die in ein Gewinde auf der Außenseite eines Endes des Schellenbandes eingreift. Zusätzlich ist das Schellenband Ω-förmig nach außen aufgebogen, so dass es zwei Taschen bildet. In diese beiden Taschen greift ein Federclip ein, der das Ω zusammendrückt. Wenn eine stärkere Spannung auf das Schellenband wirkt, dann kann sich das Ω gegen die Kraft des Federclips öffnen.

Eine Schelle dient insbesondere zur Befestigung eines Schlauchs an einem Rohrstutzen. Zur Erleichterung der Montage ist es bekannt, die Schelle an dem Schlauch vorzupositionieren. Hierzu kann man ein Anbauelement verwenden, das fest mit der Schelle verbunden ist. Dieses Anbauelement, das beispielsweise als Clips ausgebildet sein kann, greift dann an der Stirnseite des Schlauchs an und hält die Schelle dort fest. Zum Montieren des Schlauchs muß der Schlauch dann einfach auf den Stutzen geschoben werden. Die Schelle kann dann gespannt werden. Eine Montage der Schelle vor Ort auf den Schlauch ist nicht mehr erforderlich.

Zur Befestigung des Anbauelements am Schellenband werden überwiegend thermische Verfahren verwendet, d.h. man schweißt das Anbauelement und das Schellenband zusammen, beispielsweise durch eine Punktschweißung. Diese Verbindung ist zwar relativ einfach. Sie setzt aber voraus, daß Schellenband und Anbauelement durch Schweißen miteinander verbunden werden können. Dies schränkt beispielsweise die Auswahl der möglichen Werkstoffe ein.

Der Erfindung liegt die Aufgabe zugrunde, weniger Einschränkungen bei der Verbindung von Schellenband und Anbauelement zu haben.

Diese Aufgabe wird bei einem Schellenband der eingangs genannten Art dadurch gelöst, daß das Anbauelement über eine Clinchverbindung mit dem Schellenband verbunden ist.

Bei einer Clinchverbindung werden zwei kaltumformbare Werkstoffe miteinander verbunden, ohne daß man Wärme, einen Klebstoff oder ein Hilfsfügeteil benötigt. Die beiden Werkstoffe werden dabei in Form von zwei Lagen aufeinandergelegt und dann durch eine Art Tiefziehvorgang mit anschließendem Stauchen des gezogenen Bodens miteinander verbunden. Mit anderen Worten wird die eine Lage des Werkstoffs des einen Elements in die Lage des Werkstoffs des anderen Elements hinein verformt. Die Schelle und das Anbauelement halten dann durch Kraftschluß zusammen.

Hierbei ist bevorzugt, daß die Clinchverbindung eine vieleckige Grundfläche aufweist. Damit erreicht man zusätzlich, daß das Anbauelement nicht nur über einen Kraftschluß mit dem Schellenband verbunden wird, sondern zwischen dem Schellenband und dem Anbauelement auch noch ein Formschluß entsteht. Dieser Formschluß wirkt einem Verdrehmoment zwischen dem Anbauelement und dem Schellenband entgegen. Damit wird das Anbauelement verdrehsicher am Schellenband befestigt. Eine vorbestimmte Ausrichtung zwischen dem Schellenband und dem Anbauelement bleibt also erhalten.

Hierbei ist bevorzugt, daß die Clinchverbindung eine sechseckige Grundfläche aufweist. Ein Sechseck bietet eine ausreichende Widerstandskraft gegen ein auftretendes Drehmoment. Gleichzeitig werden aber bei einem Sechseck aufgrund der relativ großen Winkel zwischen benachbarten Abschnitten günstige Bedingungen für das Fließen der Werkstoffe geschaffen.

Bevorzugterweise weist die Clinchverbindung eine Ausprägung auf, die auf der Außenseite ausgebildet ist. Bei einer Clinchverbindung entsteht, wie oben ausgeführt, eine Verformung der beiden Werkstoffe von Schellenband und Anbauelement in eine dritte Dimension senkrecht zur flächigen Erstreckung der jeweiligen Befestigungsabschnitte von Schellenband und Anbauelement. Diese Verformung in die dritte Dimension ist für den Schlauch, mit dem die Schelle verbunden ist, unschädlich, wenn sie nach außen ragt. Wenn die Schelle dann gespannt wird, dann drückt sich die Ausprägung nicht in den Schlauch ein.

Vorzugsweise ist das Schellenband in das Anbauelement hinein verformt. Das Anbauelement ist also ebenfalls auf der Außenseite des Schellenbandes angeordnet. Auch dadurch wird gewährleistet, daß man die Schelle praktisch unverändert gegenüber einer Schelle ohne Anbauelement spannen kann.

Bevorzugterweise sind das Schellenband und das Anbauelement zumindest in ihrem Berührungsbereich aus unterschiedlichen Materialien gebildet. Damit lassen sich zum einen Kosten einsparen. Man kann beispielsweise das Material des Werkstoffs des Anbauelements im Hinblick auf die Funktion des Anbauelements aussuchen. Damit ergeben sich größere Freiheiten bei der Konstruktion der Schelle.

Vorzugsweise ist das Schellenband aus Chrom-Stahl gebildet. Es muß also kein Chrom-Nickel-Stahl für eine Schelle mit Anbauelement verwendet werden.

Vorzugsweise ist das Anbauelement aus einem Material mit geringerer Zugfestigkeit als das Schellenband gebildet. Damit lassen sich die Herstellungskosten weiter senken.

Vorzugsweise ist die Schelle als Schneckengewindeschelle und das Anbauelement als Vorpositionierclip ausgebildet. Bei einer Schneckengewindeschelle ist es von Vorteil, wenn die Schelle beim Spannen auf dem Schlauch festgehalten wird. Dies läßt sich auf einfache Weise mit dem Vorpositionierclip erreichen.

Die Erfindung wird im folgenden anhand eines bevorzugten Ausführungsbeispiels in Verbindung mit der Zeichnung beschrieben. Hierin zeigen:
- Fig. 1: eine Seitenansicht einer Schneckengewindeschelle,
- Fig. 2: eine Vorderansicht der Schneckengewindeschelle,
- Fig. 3: eine Draufsicht auf die Schneckengewindeschelle von innen in vergrößerter Darstellung,
- Fig. 4: eine Draufsicht auf die Schneckengewindeschelle von unten in vergrößerter Darstellung und
- Fig. 5: einen Schnitt durch eine Clinchverbindung.

Eine Schneckengewindeschelle 1 weist ein Schellenband 2 auf. Im Bereich eines Endes des Schellenbandes 2 ist ein Gehäuse 3 angeordnet, in dem eine Spannschraube 4 mit einem Kopf 5 drehbar gelagert ist.

Das Schellenband 2 weist einen ersten Endabschnitt 6 auf, der dem Gehäuse 3 benachbart ist, und einen zweiten Endabschnitt 7 am anderen Ende. Der Endabschnitt 7 weist in an sich bekannter Weise und daher nicht näher dargestellte Gewindeelemente in Form etwa axialer, in das Schellenband 2 geprägter Rillen auf. Diese Rillen können mit dem Gewinde der Spannschraube 4 in Eingriff gebracht werden. Durch Drehen der Spannschraube.4 wird dann die Schneckengewindeschelle 1 gespannt.

Am Schellenband 2 ist ein Anbauelement in Form eines Vorpositionierclips 8 befestigt. Der Vorpositionierclip 8 weist einen Befestigungsabschnitt 9 auf, der etwa rechtwinklig zur Umfangsrichtung des Schellenbandes 2 verläuft.

Der Vorpositionierclip 8 ist auf der radialen Außenseite des Schellenbandes angeordnet. Der Vorpositionierclip 8 weist eine Wand 10 auf, die sich vom Befestigungsabschnitt 9 radial nach innen erstreckt (bezogen auf das zu einem Kreis gebogene Schellenband 2). Die Wand 10 setzt sich in zwei Spitzen 11, 12 fort, die wieder in Richtung auf das Schellenband 2 zurückgebogen sind. Zwischen den Spitzen 11, 12 ist eine Ausnehmung 13 vorgesehen.

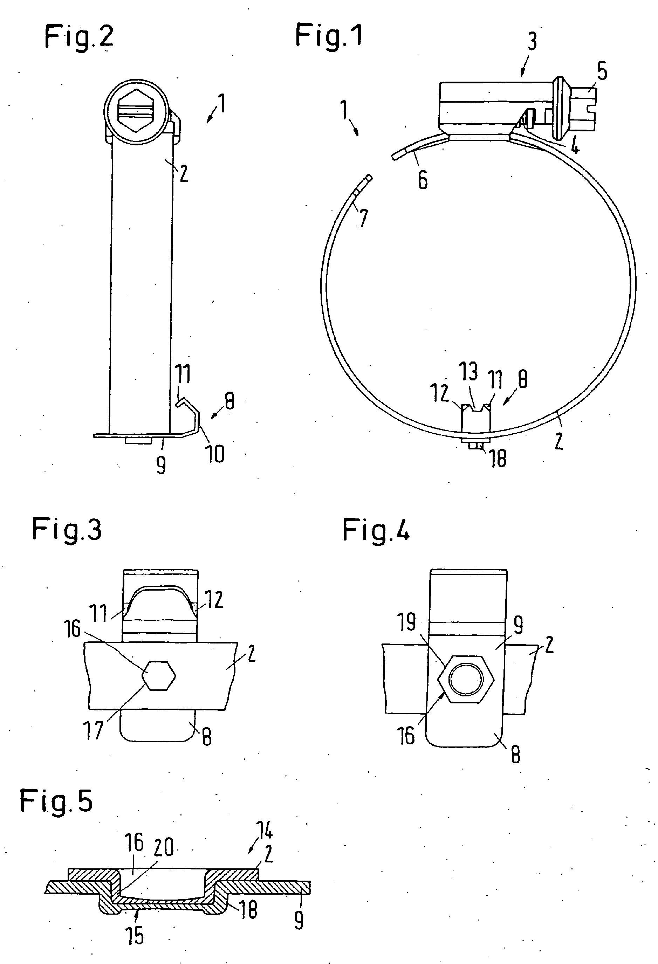

Der Vorpositionierclip 8 ist mit dem Schellenband über eine Clinchverbindung 14 verbunden, die in Fig. 5 im Schnitt dargestellt ist.

Zur Herstellung der Clinchverbindung 14 werden der Befestigungsabschnitt 9 des Vorpositionierclips 8 und das Schellenband 2 so aufeinandergelegt, daß der Befestigungsabschnitt 9 außen angeordnet ist. Alsdann wird mit einem geeigneten Werkzeug eine Art Tiefziehvorgang mit einem anschließenden Stauchen des gezogenen Bodens 15 durchgeführt.

Zum Umformen verwendet man einen Stempel mit einem sechseckigen Querschnitt, so daß die Clinchverbindung, wenn man von innen auf das Schellenband 2 blickt, eine Vertiefung 16 mit einem sechseckigen Umfang 17 aufweist. In ähnlicher Weise ist auf der Außenseite des Befestigungsabschnitts 9 des Vorpositionierclips 8 dann ein Vorsprung 18 mit einem sechseckigen Umfang zu erkennen. Bei dem Herstellen der Clinchverbindung 14 wird also das Schellenband 2 mit einem im Querschnitt sechseckigen Vorsprung 20 versehen, der in den sechseckigen Vorsprung 18 am Vorpositionierclip 8 eingreift. Da die beiden Vorsprünge 18, 20 zusammen hergestellt werden, liegen die Werkstoffe von Schellenband 2 und Befestigungsabschnitt 9 auch innerhalb der Clinchverbindung 14 flächig aneinander an.

Da die Clinchverbindung 14 nun eine vieleckige, insbesondere sechseckige Grundfläche aufweist, wirkt nicht nur ein Kraftschluß, sondern auch ein Formschluß den Verdrehmomenten zwischen dem Vorpositionierclip 8 und dem Schellenband 2 entgegen.

Da man nun nicht mehr auf Wärme zum Verbinden der beiden Elemente Schellenband 2 und Vorpositionierclip 8 angewiesen ist und man auch auf einen Klebstoff oder andere Hilfsfügeteile verzichten kann, kann man für das Schellenband 2 und den Vorpositionierclip 8 unterschiedliche Werkstoffe verwenden. Beispielsweise kann man das Schellenband auf eine hohe Zugfestigkeit hin dimensionieren, was für den Vorpositionierclip 8 nicht erforderlich ist. Für das Schellenband muß man nicht mehr Chrom-Nickel-Stahl verwenden. Es genügt nun einfacher Chrom-Stahl oder sogar einfacher Stahl.

## Patentansprüche

1. Schelle (1) mit einem Schellenband (2) und einem Anbauelement (8), das mit dem Schellenband (2) verbunden ist, **dadurch gekennzeichnet, daß** das Anbauelement (8) über eine Clinchverbindung (14) mit dem Schellenband (2) verbunden ist.

2. Schelle nach Anspruch 1, **dadurch gekennzeichnet, daß** die Clinchverbindung (14) eine vieleckige Grundfläche aufweist.

3. Schelle nach Anspruch 2, **dadurch gekennzeichnet, daß** die Clinchverbindung (14) eine sechseckige Grundfläche aufweist.

4. Schelle nach einem der Ansprüche 1 bis 3, **dadurch gekennzeichnet, daß** die Clinchverbindung (14) eine Ausprägung (18) aufweist, die auf der Außenseite ausgebildet ist.

5. Schelle nach Anspruch 4, **dadurch gekennzeichnet, daß** das Schellenband (2) in das Anbauelement (8) hinein verformt ist.

6. Schelle nach einem der Ansprüche 1 bis 5, **dadurch gekennzeichnet, daß** das Schellenband (2) und das Anbauelement (8) zumindest in ihrem Berührungsbereich aus unterschiedlichen Materialien gebildet sind.

7. Schelle nach Anspruch 6, **dadurch gekennzeichnet, daß** das Schellenband (2) aus Chrom-Stahl gebildet ist.

8. Schelle nach Anspruch 6 oder 7, **dadurch gekennzeichnet, daß** das Anbauelement (8) aus einem Material mit geringerer Zugfestigkeit als das Schellenband (2) gebildet ist.

9. Schelle nach einem der Ansprüche 1 bis 8, **dadurch gekennzeichnet, daß** die Schelle als Schneckengewindeschelle (1) und das Anbauelement (8) als Vorpositionierclip ausgebildet ist.

## Claims

1. A clamp (1) comprising a clamp band (2) and a mounting element (8) connected to the clamp band (2), **characterized in that** the mounting element (8) is connected to the clamp band (2) by a clinch connection (14).

2. The clamp according to claim 1, **characterized in that** the clinch connection (14) has a polygonal cross-section.

3. The clamp according to claim 2, **characterized in that** the clinch connection (14) has a hexagonal cross-section.

4. The clamp according to any of claims 1 to 3, **characterized in that** the clinch connection (14) includes an embossment (18) formed on the outer side thereof.

5. The clamp according to claim 4, **characterized in that** the clamp band (2) is deformed into the mounting element (8).

6. The clamp according to any of claims 1 to 5, **characterized in that** the clamp band (2) and the mounting element (8) are of different materials at least in areas where they contact each other.

7. The clamp according to claim 6, **characterized in that** the clamp band (2) is of chromium steel.

8. The clamp according to claim 6 or 7, **characterized in that** the mounting element (8) is of a material having a lower tensile strength than the clamp band (2).

9. The clamp according to any of claims 1 to 8, **characterized in that** the clamp (1) is a worm gear clamp and the mounting element (8) is a prepositioning clip.

## Revendications

1. Collier de serrage (1) comprenant une bande de collier (2) et un élément rapporté (8) qui est relié à la bande de collier (2), **caractérisé en ce que** l'élément rapporté (8) est reliée à la bande de collier (2) par une liaison à enclenchement (14).

2. Collier de serrage selon la revendication 1, **caractérisé en ce que** la liaison à enclenchement (14) présente une surface de base polygonale.

3. Collier de serrage selon la revendication 2, **caractérisé en ce que** la liaison à enclenchement (14) présente une surface de base hexagonale.

4. Collier de serrage selon l'une des revendications 1 à 3, **caractérisé en ce que** la liaison à enclenchement (14) présente un relief (18) qui est réalisé sur la face extérieure.

5. Collier de serrage selon la revendication 1, **caractérisé en ce que** la bande de collier (2) est déformée en pénétration dans l'élément rapporté (8).

6. Collier de serrage selon l'une des revendications 1 à 5, **caractérisé en ce que** la bande de collier (2) et l'élément rapporté (8) sont formés de matériaux différents, au moins dans leur zone de contact.

7. Collier de serrage selon la revendication 6, **caractérisé en ce que** la bande de collier (2) est formée en acier au chrome.

8. Collier de serrage selon la revendication 6 ou 7, **caractérisé en ce que** l'élément rapporté (8) est formé en un matériau qui présente une plus faible résistance à la traction que la bande de collier (2).

9. Collier de serrage selon l'une des revendications 1 à 8, **caractérisé en ce que** le collier de serrage est réalisé sous forme de collier à vis tangente (1) et l'élément rapporté (8) est réalisé sous forme de pince de prépositionnement.
